# EUROPÄISCHE PATENTANMELDUNG

(11) **EP 1 462 685 A1**
(43) Veröffentlichungstag der Anmeldung: **29.09.2004**
(21) Anmeldenummer: 04002403.6
(22) Anmeldetag: 04.02.2004
(51) Int. Cl.: F16J 15/08

(54) **Flachdichtung, insbesondere Zylinderkopfdichtung für Brennkraftmaschinen**

(30) Priorität: 26.03.2003 DE 10313534
(71) Anmelder: Federal -Mogul Sealing Systems GmbH, 57562 Herdorf (DE)
(72) Erfinder: Flemming, Ralf, 57520 Langenbach (DE)

(57) **Zusammenfassung**

Flachdichtung (1), insbesondere Zylinderkopfdichtung, für Brennkraftmaschinen, beinhaltend mindestens eine metallische Lage (2), in die mindestens eine Durchgangsöffnung (3) eingebracht ist, wobei die Außenabdichtung durch mehrere umlaufend ausgebildete im randnahen Bereich (7) vorgesehene, nebeneinander verlaufende Profilsicken (8) vorgebbarer Kontur herbeigeführt ist.

## Beschreibung

Die Erfindung betrifft eine Flachdichtung, insbesondere Zylinderkopfdichtung für Brennkraftmaschinen, beinhaltend mindestens eine metallische Lage, in die mindestens eine Durchgangsöffnung eingebracht ist.
Aufgrund von Poren, Lunkern und Einschlüssen kommt es insbesondere bei Zylinderkopfdichtungen zu Leckagen, weil eine einzelne Sicke derartige Fehlstellen nicht optimal abdichten kann. Auch bei ungünstiger Toleranzlage und/oder Gussversatz am Zylinderkopf und/oder am Zylinderblock kann eine einzelne Sicke die Abdichtung nicht gewährleisten.

Durch die DE-A 100 60 872 ist eine Flachdichtung mit mindestens einer metallischen Lage bekannt geworden, in der mindestens eine Durchgangsöffnung ausgebildet ist, wobei die oder zumindest eine der metallischen Lagen zumindest bereichsweise in Form einer wellen- und/oder sägezahnförmigen Profilierung um die Durchgangsöffnung(en) herum ausgebildet ist.
Durch diese Flachdichtung können lokal auftretende Einflüsse besser gehandhabt werden, ohne jedoch die vorab stehenden Probleme lösen zu können.

Der Erfindung liegt die Aufgabe zugrunde, eine Flachdichtung, insbesondere Zylinderkopfdichtung, insbesondere im Hinblick auf Problemstellen peripherer Bauteile, wie ungünstige Toleranzlagen zwischen Zylinderkopf und Zylinderblock oder dergleichen abdichtmäßig besser handhaben zu können, um auf diese Art und Weise eine erhöhte Standzeit der Flachdichtung, insbesondere der Zylinderkopfdichtung, herbeizuführen.

Diese Aufgabe wird dadurch gelöst, dass die Außenabdichtung durch mehrere umlaufend ausgebildete, im randnahen Bereich vorgesehene, nebeneinander verlaufende Profilsicken vorgebbarer Kontur herbeigeführt ist.

Vorteilhafte Weiterbildungen des Erfindungsgegenstandes sind den Unteransprüchen zu entnehmen.

Der Erfindungsgegenstand geht somit weit über den Stand der Technik gemäß DE-A 100 60 872 hinaus, indem nicht nur lokale Einflüsse, sondern vielmehr die Außenabdichtung mit einbezogen werden kann. Demzufolge können gerade die durch periphere Bauteile bedingten Problembereiche optimal abgedichtet werden, so dass eine Erhöhung der Lebensdauer herbeigeführt werden kann.

Durch mehrere kleine Sicken vorgebbarer Kontur (wellen- und/oder sägezahnartige Profile) können darüber hinaus Fehlstellen oder Gussversätze ausgeglichen werden.

Des weiteren können die Vertiefungen gezielt mit Beschichtungsmaterial aufgefüllt werden.

Erfindungsgemäß wird die Außenabdichtung somit durch mehrere nebeneinander verlaufende Profilsicken übernommen. Sollen auch lokale Einflüsse, wie sie beispielsweise in der DE-A 100 60 872 angesprochen werden, in entsprechender Weise abgedichtet werden, besteht die Möglichkeit bedarfsweise auch die Durchgangsöffnungen und weitere für Mediendurchtritte vorgesehene Durchgangslöcher mit einzelnen oder mehreren umlaufenden Profilsicken zu versehen. Bei Vorhandensein eines Stoppers neben einer Vollsicke im Bereich mindestens einer der Durchgangsöffnungen kann der Stopper durch mindestens eine Profilsicke gebildet sein.

Wird die Flachdichtung, insbesondere die Zylinderkopfdichtung, durch mehrere Lagen gebildet, besteht alternativ die Möglichkeit, die Profilsicken im Außenbereich entweder nur in eine der Lagen einzubringen oder aber mehrere Lagen damit zu versehen. Ebenfalls denkbar ist, sämtliche Lagen mit Profilsicken zu versehen, die in montiertem Zustand dann im Randbereich mehrere nebeneinander verlaufende, in unterschiedlichen Ebenen angeordnete Profilsicken bilden.

Andersartige Ausgestaltungsformen können auch darin begründet sein, in mehreren Lagen in gleicher Ebene im Randbereich gleichartige Profilsicken einzubringen, die dann im zusammengebauten Zustand der Flachdichtung, insbesondere der Zylinderkopfdichtung, ineinander oder aber mit ihren Wellenköpfen (Sägezahnprofilen) aufeinander zu liegen kommen.

Der Fachmann wird in Abhängigkeit der ausgewählten Materialien, insbesondere der Federeigenschaften, die sinnvollste Art der Ausgestaltung der Profilsicken im randnahen Bereich der Flachdichtung, insbesondere der Zylinderkopfdichtung, auswählen, um so eine Verbesserung der Dichtwirkung über einen langen Zeitraum herbeizuführen.
Als Füllstoffe für die Talbereiche der Profilsicken können beispielsweise Elastomere zum Einsatz gelangen, wobei die Auswahl derselben von den Federeigenschaften des metallischen Basismateriales abhängig gemacht wird.
Bei Bedarf kann es auch sinnvoll sein, umlaufend ausgebildete Profilsicken so vorzusehen, dass die nebeneinander parallel verlaufenden Sicken unterschiedliche Prägung aufweisen. So kann beispielsweise eine äußere wellenartig ausgebildete Profilsicke neben einer parallel dazu verlaufenden, jedoch mit einem sägezahnartigen Profil ausgebildeten Profilsicke vorgesehen sein.

Der Erfindungsgegenstand ist anhand eines Ausführungsbeispieles in der Zeichnung dargestellt und wird wie folgt beschrieben. Es zeigen:
- Figur 1: Draufsicht auf eine Flachdichtung, insbesondere eine Zylinderkopfdichtung,
- Figuren 2 bis 5: Schnitte durch die Flachdichtung gemäß Figur 1

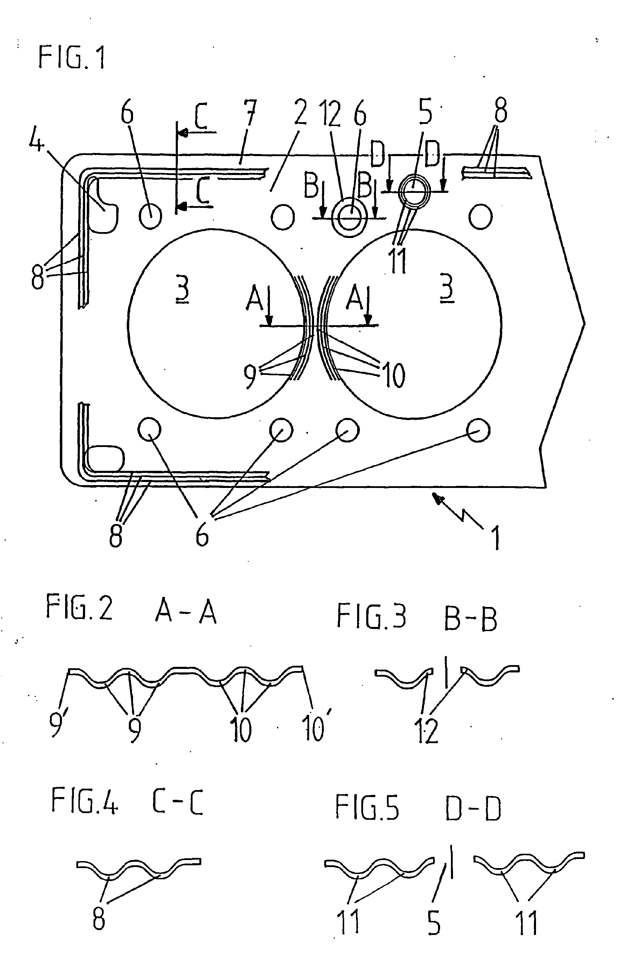

Figur 1 zeigt als Ausführungsbeispiel eine Flachdichtung 1, die in diesem Beispiel eine einzelne metallische Lage 2 beinhalten soll. Wie bereits vorabstehend ausgeführt, kann die Flachdichtung jedoch aus mehreren Lagen bestehen, so dass das Ausführungsbeispiel gemäß Figur 1 kein Auschlußbeispiel darstellt. In die metallische Lage 2 sind Brennraum-Durchgangsöffnungen 3 eingebracht. Ferner sind Durchgangslöcher 4, 5 für Mediendurchtritte (Kühlmittel, Schmiermittel) vorgesehen. Mit dem Bezugszeichen 6 sind Schraubendurchgangslöcher angesprochen.
In Figur 1 ist erkennbar, dass im randnahen Bereich 7 der metallischen Lage 2 der Außenabdichtung dienende nebeneinander verlaufende Profilsicken 8 vorgesehen sind. Diese Profilsicken können sowohl als Wellensicken ausgebildet sein als auch durch sägezahnartige Profile gebildet werden. Infolge dieser nebeneinander parallel verlaufenden kleinen Sicken werden Fehlstellen oder Gussversätze peripherer Bauteile ausgeglichen. Hier nicht weiter erkennbar ist, dass die Täler der Profilsicken 8 mit Beschichtungsmaterial aufgefüllt sind. Die Außenabdichtung der Flachdichtung 1 wird somit ausschließlich durch die umlaufend ausgebildeten, nebeneinander parallel verlaufenden Profilsicken 8 übernommen. Auch der Bereich der Durchgangsöffnungen 3 ist von umlaufend ausgebildeten Profilsicken 9, 10 in Mehrfachanordnung umgeben. Lediglich angedeutet ist, dass auch die für Mediendurchtritte vorgesehenen Durchgangslöcher 5 von Profilsicken 11 umgeben sind. Bedarfsweise können auch die Schraubendurchgangslöcher 6 von Profilsicken 12 umgeben werden.
Die Schnitte A-A, B-B, C-C, D-D gemäß Figuren 2 bis 5 zeigen die Querschnitte im jeweiligen Schnittbereich der Figur 1.

So zeigt die Figur 2 den Schnitt A-A durch die brennraumseitigen Durchgangsöffnungen 3. Brennraumseitig sind Halbsicken 9', 10' vorgesehen, während die weiteren wellenartig ausgebildeten Sicken 9, 10 Vollsicken sind.
Figur 3 zeigt den Schnitt B-B. Dargestellt ist ein Schraubendurchgangsloch 6, das von einer Halbsicke 12 umschlossen ist.
Der Schnitt C-C gemäß Figur 4 zeigt den außennahen Randbereich 7, wobei hier Vollsicken als Profilsicken 8 vorgesehen sind.
Figur 5 zeigt einen Schnitt D-D, der einen Mediendurchtritt anspricht. Auch hier sind Vollsicken als Profilsicken 11 dargestellt.
Der Fachmann wird die Art und Ausgestaltung der jeweils zum Einsatz gelangenden Profilsicken vom jeweiligen Anwendungsfall abhängig machen, so dass die in den Figuren 1 bis 5 dargestellten Beispiele lediglich als solche zu werten sind.

## Patentansprüche

1. Flachdichtung, insbesondere Zylinderkopfdichtung, für Brennkraftmaschinen, beinhaltend mindestens eine metallische Lage (2), in die mindestens eine Durchgangsöffnung (3) eingebracht ist, **dadurch gekennzeichnet, dass** die Außenabdichtung durch mehrere umlaufend ausgebildete im randnahen Bereich (7) vorgesehene, nebeneinander verlaufende Profilsicken (8) vorgebbarer Kontur herbeigeführt ist.

2. Flachdichtung nach Anspruch 1, **dadurch gekennzeichnet, dass** die Profilsicken (8) als umlaufende Wellensicken ausgebildet sind.

3. Flachdichtung nach Anspruch 1, **dadurch gekennzeichnet, dass** die Profilsicken (8) durch ein umlaufendes sägezahnartiges Profil gebildet sind.

4. Flachdichtung nach einem der Ansprüche 1 bis 3, **dadurch gekennzeichnet, dass** die Profilsicken (8) gleichförmig zueinander parallel verlaufen.

5. Flachdichtung nach einem der Ansprüche 1 bis 3, **dadurch gekennzeichnet, dass** die Profilsicken (8) vom Querschnitt her versetzt zueinander parallel verlaufen.

6. Flachdichtung nach einem der Ansprüche 1 bis 5, **dadurch gekennzeichnet, dass** die Vertiefungen der Profilsicken (8) mit insbesondere elastomerartig ausgebildetem Beschichtungsmaterial gefüllt sind.

7. Flachdichtung nach einem der Ansprüche 1 bis 6, **dadurch gekennzeichnet, daß** bedarfsweise auch die Durchgangsöffnungen (3) sowie gegebenenfalls vorhandene für Mediendurchtritte vorgesehene Durchgangslöcher (4, 5), Schraubendurchgangslöcher (6) oder dergleichen, von mindestens einer umlaufend ausgebildeten Profilsicke (9, 10, 11, 12) umgeben sind.

8. Flachdichtung nach einem der Ansprüche 1 bis 7, **dadurch gekennzeichnet, daß** bei Vorhandensein eines Stoppers neben einer Vollsicke im Bereich der Durchgangsöffnung (3) der Stopper durch mindestens eine Profilsicke (8) gebildet ist.
